# EUROPÄISCHE PATENTANMELDUNG

(11) **EP 4 428 106 A1**
(43) Veröffentlichungstag der Anmeldung: **11.09.2024**
(21) Anmeldenummer: 23160463.8
(22) Anmeldetag: 07.03.2023
(51) Int. Cl.: C03B 19/14

(54) **ANTRIEBSSYNCHRONISATION FÜR SOOT-ABSCHEIDEMASCHINE ZUR VERMEIDUNG VON STRUKTURBILDUNGEN IN ABSCHEIDEPROZESSEN**

(71) Anmelder: Heraeus Quarzglas GmbH & Co. KG, 63450 Hanau (DE)
(72) Erfinder: WÄLTE, Andreas, 06803 Bitterfeld-Wolfen (DE); BADEKE, Klaus-Uwe, 06803 Bitterfeld-Wolfen (DE)
(74) Vertreter: Heraeus IP

(57) **Zusammenfassung**

Beschrieben wird ein Verfahren zur Abscheidung von SiO2-Sootteilchen auf einer Ablagerungsfläche unter Verwendung von mindestens zwei zueinander beabstandeten und benachbarten Aufbaubrennern, wobei die Oszillationsfrequenz der Abscheidebrenner, die Rotationsfrequenz des Sootkörpers sowie gegebenenfalls die Lage der Wendepunkte so kontinuierich verändert werden, dass eine homogene Abscheidung der SiO2-Sootteilchen bein einer guten Abscheidefficizienz erreicht wird.

## Beschreibung

Die vorliegende Erfindung betrifft ein Verfahren und eine Vorrichtung zur Herstellung von synthetischem Quarzglas, bei welchem Strukturbildungen in Abscheideprozessen im Wesentlichen vermieden werden.

### STAND DER TECHNIK

Aus dem Stand der Technik sind zahlreiche Verfahren zur Herstellung von synthetischem Quarzglas bekannt, wobei aus einer siliziumhaltigen Ausgangssubstanz in einem CVD-Verfahren durch Hydrolyse oder Oxidation SiO₂-Sootteilchen erzeugt und auf einem sich bewegenden Träger abgeschieden werden. In diesen Verfahren werden teilweise mehrere benachbarte Aufbaubrenner verwendet, in welchen sie SiO₂-Sootteilohen erzeugt werden.

US 5,211,732 beschreibt ein Sootaufbauverfahren zur Herstellung von synthetischem Quarzglas, bei welchem ungleiche Abscheideleistungen benachbarter Aufbaubrenner und längere Verweilzeiten der Aufbaubrenner im jeweiligen Umkehrpunkt durch Variation der Endfahrpositionen (Wendepunkte) der Aufbaubrenner bei jeder Hin- und Rückbewegung nach einem festen Muster verschmiert werden. Dabei wird die Oszillationsbewegung durch eine zusätzliche Verlagerungsbewegung überlagert, wobei gemäß der Abbildung 7 der US 5,211,732 die Oszillation als auch die Verlagerungsbewegung eine identische Amplitude des Brenner-Brenner-Abstands aufweisen können. Die Translationsamplitude beträgt dabei ca. die Hälfte der Oszillationsamplitude. Die Frequenz der Translationsbewegung entspricht wiederum etwa einem Zehntel der Oszillationsfrequenz. Das führt axial zu einer im Wesentlichen gleichmäßigen Überdeckung aller Bereiche des Targets durch zwei benachbarte Aufbaubrenner und im Bereich der Translationsumkehrpunkte (Wendepunkte) durch drei benachbarte Brenner. In diesem Stand der Technik gibt es jedoch keine Korrelation zwischen Oszillations- und Rotationsfrequenz. Damit lassen sich ungünstige Frequenzverhältnisse nicht ausschließen und treten auch regelmäßig auf.

US 2018/0237330 A beschreibt ein OVD-Sootaufbauverfahren zur Herstellung von porösen Vorformen für optische Fasern. Dabei steht die Vermeidung von Kernexzentrizitäten im Vordergrund, die durch eine ungleichmäßige Abscheidedicke beim Sootaufbau, insbesondere bei großen Vorformen, entstehen können. Hierzu werden in unterschiedlichen Phasen des Sootaufbaus unterschiedliche Vorgaben gemacht, mit denen vermieden werden soll, dass Brennerspuren aufeinander fallen. Dabei kann die Vorrichtung einen oder mehrere Sootaufbaubrenner aufweisen. Die Vermeidung von aufeinander fallenden Brennerspuren gemäß diesem Stand der Technik wird auch für andere Verfahren der Quarzglasherstellung, beispielsweise für ein MCVD-Verfahren oder ein PCVD-Verfahren, beschrieben. In dem beschriebenen Verfahren wird der Quarzglaskörper während des Aufbauprozesses rotiert und die Brenner beschreiben eine reversierende Bewegung, wobei Brennerspuren dann aufeinander fallen, wenn die Zeiten, die der Körper für eine Rotation und die Brenner für eine reversierende Bewegung benötigen, in einem Verhältnis zueinanderstehen, dass der Startpunkt für die reversierende Brennerbewegung nach einem oder mehreren Durchläufen identisch ist. Der Stand der Technik lehrt darüber hinaus, dass insbesondere bei großen Schichtdicken dieser Zustand der aufeinander fallenden Brennerspuren vermieden werden soll, während er bei geringen Schichtdicken durchaus positiv sein kann. Um bei großen Schichtdicken das Aufeinanderfallen von Brennerspuren zu vermeiden, werden Vorgaben für den Bewegungswinkel definiert, wobei der Bewegungswinkel eine Linie von der Körperachse bis zu einem festen Punkt auf der Sootkörperoberfläche während der Dauer einer reversierenden Brennerbewegung beschreibt. In diesem Stand der Technik wird somit die Einstellung eines einzigen Brenners und damit die Einstellung der Lage einer einzigen Brennerspur betrachtet.

EP 3 279 155 A betrifft ein Verfahren zum Aufbau eines Sootkörpers, der auf einem Trägerkörper abgeschieden wird. Der Trägerkörper bewegt sich relativ zu einem Aufbaubrenner hin und her und führt somit eine reversierende Bewegung durch. Wenn der Körperradius sich in einem Bereich von 50 bis 80 % des Zielradius befindet, werden die Rotationsgeschwindigkeit r und die Brennertranslationsgeschwindigkeit V graduell so reduziert, dass die Spurbreite V/r im Wesentlichen konstant bleibt und sich um nicht mehr als 10 % verändert. Durch diese Maßnahme sollen Variation im Durchmesser des Sootkörpers vermindert werden.

JP 2013/043810 A beschreibt ein Aufbauverfahren für einen Sootkörper, bei dem eine Wellenbildung bei dem Sootkörper unterdrückt wird, um eine verbesserte Transmission einer optischen Faser, die aus dem Sootkörper hergestellt wird, zu erreichen. Der Sootkörper wird beim Aufbauprozess rotiert und die Aufbaubrenner werden relativ dazu in einer reversierenden Bewegung hin und her geführt. Die Wellenbildung wird durch eine Synchronisation der Rotationsbewegung mit der Translationsbewegung erreicht, wobei ein Zyklus der Hin- und Herbewegung abgeschlossen wird, während der Körper um eine (n+1/2)-fache Umdrehung mit n = 0, 1, 2, ... rotiert wurde. Damit wird ein Versatz von benachbarten Lagen von ein und demselben Brenner erreicht. Der Stand der Technik beschreibt jedoch nicht, wie die Rotation des Sootkörpers und die Translation der Brenner zu synchronisieren ist, damit die Spuren vom benachbarten Brenner einer Brenneranordnung nicht interferieren.

US 6,678,940; US 7,451,623; US 7,541,624; US 2009/0038346 A; und US 8,635,888 beschreiben Verfahren zum Aufbau von Sootkörpern, bei welchen eine zufällige Variation der Rotationsgeschwindigkeit verwendet wird, um eine Welligkeit zu vermeiden.

US 2002/081377 A beschreibt eine Mehrfach-Brenner-Anordnung, bei welcher bewusst die Lagen von Spiralen der Brennerspuren zueinander eingestellt werden. Dabei wird das Verfahren so durchgeführt, dass aufeinander folgende Brennerspuren beabstandet sind.

JP H0725637 A beschreibt ein OVD-Sootaufbauverfahren, wobei eine ständige Variation der Spurbreite vorgenommen wird. In den Ausführungsbeispielen wird diese Variation dadurch erreicht, dass entweder die Brennergeschwindigkeit oder die Rotation des Sootkörpers in kleinen Bereichen variiert wird.

JP H0687624 A beschreibt ein OVD-Sootaufbauverfahren, bei welchem die Welligkeit der Sootkörperoberfläche vermieden wird. Hierzu vollzieht der Aufbaubrenner eine reversierende Bewegung relativ zum Aufbautarget und erzeugt dabei eine Sootspirale. Auf dem Rückweg des Aufbaubrenners wird das Target andersherum rotiert und die Sootspur so gelegt, dass sie genau zwischen der Spur des Hinwegs erzeugt wird.

### AUFGABENSTELLUNG

Basierend auf diesem Stand der Technik ist es die Aufgabe der vorliegenden Erfindung, ein Verfahren zur Abscheidung von SiO₂-Sootteilchen auf einer Ablagerungsfläche unter Verwendung von mindestens zwei zueinander beabstandeten Aufbaubrennern bereitzustellen, bei welchem die Oszillationsfrequenz der Abscheidebrenner, die Rotationsfrequenz des Sootkörpers sowie gegebenenfalls die Lage der Wendepunkte so kontinuierlich verändert werden, dass eine homogene Abscheidung der SiO₂-Sootteilohen bei einer guten Abscheideeffizienz erreicht wird.

Dabei soll sich das erfindungsgemäße Verfahren insbesondere dazu eignen, ungünstige Bewegungsmuster, bei denen es über mehrere Rotationen des Sootkörpers zu einer wiederholten Abscheidung der SiO₂-Sootteilchen auf den gleichen oder nahe beieinanderliegenden axialen Positionen in der gleichen Winkelebene, d. h. in der Ebene aus Längsachse des Sootkörpers und eines beliebigen Punktes auf seiner Mantelfläche gebildeten Ebene, kommt, vermieden werden.

### VERFAHREN ZUR ABSCHEIDUNG VON SiO₂-SOOTTEICHEN

Gelöst werden diese Aufgaben durch ein Verfahren zur Abscheidung von SiO₂-Sootteilchen auf einer Ablagerungsfläche unter Verwendung von mindestens zwei zueinander beabstandeten Aufbaubrennern, wobei einerseits eine spezielle Korrelation der Oszillations- und Rotationsfrequenzen gewählt wird und andererseits der zugrundeliegende technische Effekt durch eine Lageverschiebung der Umkehrpunkte bei der Translationsbewegung der Aufbaubrenner erreicht wird. Diesbezüglich wird unter der Oszillationsfrequenz die Frequenz der Translation der Aufbaubrenner im Verhältnis zu der Längsachse des gebildeten Sootkörpers, entweder durch Bewegung der Aufbaubrenner, durch Bewegung des Sootkörpers oder durch gleichzeitige Bewegung der Aufbaubrenner und des Sootkörpers, verstanden und unter der Rotationsfrequenz die Frequenz der Rotation des Sootkörpers um seine Längsachse verstanden.

Gegenstand der vorliegenden Erfindung ist somit ein Verfahren zur Abscheidung von SiO₂-Sootteilchen auf einer Ablagerungsfläche unter Verwendung von mindestens zwei zueinander beabstandeten und benachbarten Aufbaubrennern, wobei
der Abstand zwischen den mindestens zwei Aufbaubrennern d beträgt; und
die Ablagerungsfläche eine Zylindermantelfläche eines um seine Längsachse rotierenden Trägers ist, auf welchem schichtweise SiO₂-Sootteilohen abgeschieden werden.

Das erfindungsgemäße Verfahren ist dann dadurch gekennzeichnet, dass
die Aufbaubrenner, bezogen auf die Ablagerungsfläche, eine Translationsbewegung im Wesentlichen parallel zu der Längsachse des rotierenden Trägers um eine Amplitude des n-fachen Brenner-Brenner-Abstandes d durchführen, wobei n eine ganzzahlige Zahl größer gleich 2 ist und d dem einfachen Brenner-Brenner-Abstand entspricht,
die Ablagerungsfläche um eine m₁-fache Anzahl um die Längsachse des Trägers rotiert, wobei m₁ eine von ganzzahligen Zahlen abweichende positive Dezimalzahl darstellt, und
die Zeitspanne für die m₁-fache Rotation der Längsachse des Trägers im Wesentlichen der Zeitspanne für die Translationsbewegung der Aufbaubrenner von einem Brenner-Brenner-Abstand d entspricht.

Im Rahmen der vorliegenden Erfindung erfolgt die Einstellung der Lage von benachbarten Spuren der Aufbaubrenner somit durch die Einstellung des Verhältnisses der Frequenzen von Rotation des Sootkörpers und der Translation der Aufbaubrenner zu der Längsachse des Sootkörpers. Erfindungsgemäß ist demnach vorgegeben, dass der Sootkörper eine Anzahl an Rotationen durchführt, die von einer ganzzahligen Zahl abweicht (m₁ ist eine von ganzzahligen Zahlen abweichende Dezimalzahl), während ein Brenner in einem Hub eine Translation von einem einfachen Brenner-Brenner-Abstand durchführt.

In dem erfindungsgemäßen Verfahren deponiert dabei jeder Aufbaubrenner bei seiner Translationsbewegung bei gleichzeitiger Rotation des SiO₂-Sootkörpers eine spiralförmige Spur auf dem Sootkörper und durch das vorstehend beschriebene Verhältnis von Rotation und Translation werden die Spuren der Aufbaubrenner so platziert, dass sich ein homogener Sootkörper ausbildet. Im Rahmen der vorliegenden Erfindung wird unter einem homogenen Sootkörper insbesondere ein Sootkörper mit homogener Dichte beispielsweise aufgrund der erreichten homogenen Spurlagen verstanden.

Bevor das erfindungsgemäße Verfahren nun im Detail weiter beschrieben wird, sollen zunächst einige Definition für das erfindungsgemäße Verfahren vorgenommen werden.

### DEFINITIONEN

Im Rahmen der vorliegenden Erfindung wird unter einer "reversierenden Bewegung" der Aufbaubrenner verstanden, wenn die Aufbaubrenner in einem zeitlich abgestimmten Wechsel sich in die eine oder andere Richtung parallel zur Längsachse des rotierenden Trägers bewegen.

Im Rahmen der vorliegenden Erfindung wird unter einem Aufbaubrenner ein Brenner verstanden, in welchem SiO₂-Sootteilchen erzeugt werden, die auf eine Ablagerungsfläche aus einem Zylinder abgeschieden werden. Wenn im Rahmen der vorliegenden Erfindung von einem Aufbaubrenner im Singular gesprochen wird, bedeutet die Verwendung des Singulars nicht zwingend, dass nur ein Aufbaubrenner verwendet wird. Gleichfalls kann der Singular "Aufbaubrenner" für zwei oder mehr Aufbaubrenner verwendet werden.

Im Rahmen der vorliegenden Erfindung wird unter einen "Wendepunkt" ein räumlicher Punkt der Längsachse bzw. eine axiale Position auf der Längsachse des rotierenden Trägers verstanden, an welchem sich die Richtung der reversierenden Bewegung der Aufbaubrenner und/oder der Ablagerungsfläche ändert.

Im Rahmen der vorliegenden Erfindung wird unter einem "Hub" die vollständige Bewegung der Aufbaubrenner und/oder der Ablagerungsfläche in eine Richtung der reversierenden Bewegung bis zu einem Wendepunkt verstanden, bei welchem sich die Bewegung der Aufbaubrenner und/oder Ablagerungsfläche umkehrt.

Im Rahmen der vorliegenden Erfindung wird unter einer "Amplitude der Translation"
a) die absolute Bewegungsstrecke eines Aufbaubrenners in eine Richtung entlang der statischen Längsachse des rotierenden Trägers bis zu einem Wendepunkt der reversierenden Bewegung,
b) die absolute Bewegungsstrecke der Ablagerungsfläche entlang einem statisch fixierten Aufbaubrenner bis zu einem Wendepunkt der reversierenden Bewegung oder
c) die absolute Summe aus der Bewegungsstrecke eines Aufbaubrenners bis zu einem Wendepunkt der reversierenden Bewegung des Aufbaubrenners und der Bewegungsstrecke der Ablagerungsfläche bis zu einem Wendepunkt der reversierenden Bewegung der Ablagerungsfläche, wenn die Aufbaubrenner und die Ablagerungsfläche sich in entgegengesetzte Richtungen bewegen
verstanden.

Im Rahmen der vorliegenden Erfindung werden mindestens zwei Aufbaubrenner verwendet. Diese mindestens zwei Aufbaubrenner haben einen Abstand zueinander im Wesentlichen parallel zu der Längsachse des Sootkörpers von d. Es ist selbstverständlich möglich, dass mehr als zwei Aufbaubrenner in dem erfindungsgemäßen Verfahren verwendet werden. In dieser Ausgestaltung beträgt der Abstand von benachbarten Aufbaubrennern jeweils d; das bedeutet, dass die jeweiligen Aufbaubrenner äquidistant zueinander angeordnet sind. In dem erfindungsgemäßen Verfahren werden mindestens 2, vorzugsweise 10 bis 100 Aufbaubrenner, noch weiter bevorzugt 20 bis 50, Aufbaubrenner verwendet. Die Gesamtheit der Aufbaubrenner, die äquidistant zueinander angeordnet sind, wird im Rahmen der vorliegenden Erfindung als Brenneranordnung bezeichnet.

### BEVORZUGTE AUSGESTALTUNGEN

Das erfindungsgemäße Verfahren wird vorzugsweise als OVD-Verfahren durchgeführt. Bei dem erfindungsgemäßen OVD-Verfahren wird vorzugsweise eine Schichtstruktur mit einer im Wesentlichen konzentrisch zur Rohling-Längsachse verlaufenden spiralförmigen Schicht erzeugt, indem auf der Zylindermantelfläche des um seine Längsachse rotierenden Trägers schichtweise SiO₂-Partikel abgeschieden werden, während der Aufbaubrenner eine Translationsbewegung parallel zur Längsachse der Zylindermantelfläche durchführt. Demgegenüber ergibt sich beim erfindungsgemäß ebenfalls möglichen VAD-Verfahren, bei dem auf einem scheibenförmigen, rotierenden Träger durch axiale Abscheidung ein SiO₂-Vollzylinder in Richtung der Zylinder-Längsachse aufgebaut wird, in der Regel eine wendelförmige Schichtstruktur mit axial aufeinander folgenden Schichten, die sich senkrecht zur Zylinder-Längsachse erstrecken.

Im Rahmen von OVD-Verfahren kommen erfindungsgemäß unterschiedliche Verfahrensausgestaltungen in Frage.

In einer ersten Ausführungsform wird das OVD-Verfahren mit einem Soot-Hohlzylinder durchgeführt, auf welchem die SiO₂-Sootteilchen abgeschieden werden. Der Hohlzylinder wird dabei mittels einer Haltevorrichtung in vertikaler oder horizontaler Ausrichtung, vorzugsweise in horizontalerAusrichtung, gehalten. Insbesondere bei der Herstellung von relativ schweren SiO₂-Sootkörpern ist eine horizontale Anordnung bevorzugt. Auf dem Hohlzylinder werden dann die entsprechenden SiO₂-Sootteilchen abgeschieden. Der SiO₂-Sootkörper, der als Hohlzylinder ausgebildet ist, kann in seinem Inneren einen Träger aufweisen, auf welchem die ersten SiO₂-Sootteilchen am Beginn des erfindungsgemäßen Verfahrens abgeschieden werden. Hierfür kann man beispielsweise einen keramischen Träger verwenden, der nach dem Sootaufbauprozess entfernt wird, wonach der Sootkörper weiterverarbeitet und schließlich verglast wird.

Darüber hinaus kann das erfindungsgemäße Verfahren als sogenanntes SOCR-Verfahren (SOCR = *soot on core rod*) durchgeführt werden, in welchem die erzeugten SiO₂-Sootteilchen direkt auf einem Kernstab, welcher in der Regel aus Quarzglas gebildet wird, abgeschieden werden. Der Kernstab kann anschließend in dem OVD-Körper verbleiben. Entsprechende Verfahrensprodukte, die mit einem SOCR-Verfahren hergestellt werden können, sind Vorformen aus Kernstäben mit Sootschichten.

Eine weitere Ausgestaltung des erfindungsgemäßen Verfahrens ist das sogenannte AVAD-Verfahren (Advanced VAD-Verfahren), bei welchem zuerst ein VAD-Sootkörper hergestellt wird. Im Anschluss werden mittels eines OVD-Verfahrens außen auf dem noch nicht verglasten VAD-Sootkörper SiO₂-Sootteilchen abgeschieden.

Im Stand der Technik ist den genannten Herstellungsverfahren infolge des schichtweisen Abscheidens von SiO₂-Partikeln die Bildung von Schichtstrukturen inhärent. Diese können sich als sogenannte Schlieren bemerkbar machen, die auf Brechzahl-Unterschiede zwischen benachbarten Schichten hinweisen.

Durch die erfindungsgemäße Einstellung der Bewegungsmuster lassen sich diese sowie die eingangs erwähnten Nachteile bei den Schichtstrukturen effizient vermeiden.

In einer bevorzugten Ausgestaltung des erfindungsgemäßen Verfahrens rotiert die Ablagerungsfläche um die Längsachse des Trägers.

In einer weiteren bevorzugten Ausführungsform entspricht die Zeitspanne für die (m₂+(k/n))-fache Rotation der Ablagerungsfläche um die Längsachse des Trägers im Wesentlichen der Zeitspanne für die Translationsbewegung der Aufbaubrenner von einem Brenner-Brenner-Abstand d entspricht, wobei m₂ einer ganzzahligen Zahl von 1 bis 100, vorzugsweise von 3 bis 35, noch weiter bevorzugt von 5 bis 25, entspricht, keine natürliche Zahl kleiner n ist und m₁ = m₂+(k/n) entspricht. Die Variable n, welche den Gesamtbetrag der Translation in einer Richtung und damit die Amplitude bestimmt, ist vorzugsweise eine ganzzahlige Zahl größer gleich 2, weiter bevorzugt eine ganzzahlige Zahl größer gleich 2 und kleiner gleich 10, noch weiter bevorzugt eine ganzzahlige Zahl größer gleich 2 und kleiner gleich 5, noch weiter bevorzugt 2, 3 oder 4, insbesondere 2.

Ein erfindungsgemäßer Vorteil einer Amplitude der Translation um den n-fachen Brenner-Brenner-Abstand ist, dass der hergestellte Sootkörper aus SiO₂ über dadurch resultierende konische Enden verfügt. Diese konischen Enden können durch die Verwendung von zusätzlichen Heizbrennern und Zusatzheizern verfestigt werden. Die zusätzlichen Heizbrenner führen, analog wie die Aufbaubrenner, bei Bewegung der Aufbaubrenner eine Translation gemeinsam mit den Aufbaubrennern durch, während die Zusatzheizer eine relativ zu dem Sootkörper stationäre Position aufweisen.

Ein weiterer Vorteil einer Amplitude um den n-fachen Brenner-Brenner-Abstand ist, dass in jedem Bereich des SiO₂-Sootkörpers mehr als ein Brenner den Sootkörper aufbauen, so dass etwaige Geometrieschwankungen durch abweichende Aufbauraten einzelner Aufbaubrenner sich nicht so stark auswirken.

Bei dem erfindungsgemäßen Multibrennerverfahren weisen die Brenner eine äquidistante Anordnung auf und werden gemeinsam entlang der Längsachse des Sootkörpers bewegt. Jeder Brenner baut dabei nur in einem begrenzten Bereich des Sootkörpers diesen auf, da die Amplitude in einem Hub deutlich kleiner ist als die Länge des aufzubauenden Sootkörpers.

Unter der Annahme der Verwendung von mindestens zwei Aufbaubrennern, einem Bezugsaufbaubrenner und einem hierzu benachbarten zweiten Aufbaubrenner, ergibt sich aufgrund der ungeraden Rotation des Sootkörpers bei der zweiten Translation um den Brenner-Brenner-Abstand d eine spiralförmige Abscheidespur des zweiten Aufbaubrenners zwischen der ersten Abscheidespur (die während der ersten Translation um den einfachen Brenner-Brenner-Abstand d gebildet wurde) und der zweiten Abscheidespur (die während der zweiten Translation um den einfachen Brenner-Brenner-Abstand d gebildet wird) des Bezugsaufbaubrenners.

Hierdurch wird sichergestellt, dass nach den einzelnen Translationen die Abscheidespuren des Bezugsaufbaubrenners und des benachbarten zweiten Aufbaubrenners sich nicht überlagern.

Bei der vorstehend beschriebenen bevorzugten Ausgestaltung des erfindungsgemäßen Verfahrens, in welcher die Aufbaubrenner eine Translationsbewegung im Wesentlichen parallel zu der Längsachse des rotierenden Trägers um eine Amplitude des n-fachen Brenner-Brenner-Abstands d durchführen, während in einem Zeitraum in welchem die Translation um den einfachen Brenner-Brenner-Abstand fortschreitet, die Ablagerungsfläche um eine Anzahl von (m₂+(k/n)) um ihre Längsachse rotiert und m₂ eine ganzzahlige Zahl von 1 bis 100, vorzugsweise von 3 bis 35, noch weiter bevorzugt von 5 bis 25, entspricht, k eine natürliche Zahl kleiner n ist und m₁ = m₂+(k/n) entspricht, ist die Abscheidespur des zweiten Aufbaubrenners genau mittig zwischen den beiden Abscheidespuren des Bezugsaufbaubrenners angeordnet.

Wenn die erfindungsgemäße Vorrichtung mehr als zwei Aufbaubrenner umfasst, wird durch den im Wesentlichen äquidistanten Abstand zwischen den jeweiligen Aufbaubrennern eine Interferenz, d. h. eine Überlagerung, von allen Abscheidespuren der verwendeten Aufbaubrenner effizient vermieden.

In dem erfindungsgemäßen Verfahren wird eine Vorrichtung verwendet, in welcher der Abstand benachbarter Aufbaubrenner im Allgemeinen äquidistant ist und wobei der Abstand zwischen zwei benachbarten Aufbaubrennern vorzugsweise 10 bis 300 mm, weiter bevorzugt 30 bis 300 mm, noch weiter bevorzugt 15 bis 150 mm, beträgt.

In der vorliegenden Erfindung stellen die Translationsbewegungen der Aufbaubrenner eine reversierende Bewegung dar, deren Richtung, jeweils parallel zu der Längsachse des Sootkörpers, sich in Wendepunkten verändert. Damit nach einer Hinbewegung der Aufbaubrenner (erster vollständiger Hub) und einer Rückbewegung (zweiter vollständiger Hub) der Aufbaubrenner, jeweils im Wesentlichen parallel zur Längsachse des Sootkörpers, es nicht zu einer Überlagerung der Ausgangspunkte der Brenner bei der nächsten Hinbewegung (dritter vollständige Hub) der Aufbaubrenner kommt, ist in einer weiteren Ausgestaltung des erfindungsgemäßen Verfahrens vorgesehen, dass sich die Position der Wendepunkte, bezogen auf die Ablagerungsfläche, verändern. Weiterhin ergeben sich, wenn man die Abscheidespuren der Hin- und der Rückbewegung betrachtet, Kreuzungspunkte, in denen eine gehäufte Abscheidung stattfindet. Ein Ziel bei der Festlegung des Bewegungsmusters ist, dass sich diese Kreuzungspunkte gleichmäßig über den Sootkörper verteilen

Die Variation der Translation durch Veränderung der Wendepunkte kann in jedem Hub der reversierenden Bewegung erfolgen. Ferner ist es möglich, dass die Variation der Translation durch Veränderung der Wendepunkte in jedem zweiten, dritten, vierten oder fünften Hub der reversierenden Bewegung erfolgt.

Die Veränderung der Lage der Wendepunkte kann in einer ersten Ausgestaltung durch einen fest definierten Versatz in dem jeweiligen Hub, in denen eine Veränderung der Wendepunkte vorzunehmen sind, erfolgen (d.h., dass sich die Wendepunkte gemäß einem fest vordefinierten Bewegungsmuster in jedem Hub verändern).

Alternativ ist es auch möglich, dass sich die Lage der Wendepunkte in dem jeweiligen Hub, in denen eine Veränderung der Wendepunkte vorzunehmen ist, durch einen statistisch veränderten Versatz in jedem entsprechenden Hub verändert. In dieser Ausgestaltung variiert die Positionsveränderung der Wendepunkte statistisch (d.h., dass sich die Wendepunkte durch einen statistisch veränderten Versatz in jedem Hub verändern).

In beiden Ausgestaltungen wird der Versatz dann zu einem Referenzwendepunkt bestimmt.

Grundsätzlich sind zwei Verfahrensweisen zur konkreten Veränderung der Wendepunkte möglich.

In einer ersten Verfahrensweise wird nach einer vollständigen Rotation vor dem festen Referenzwendepunkt eine mit einer Zufallszahl zwischen 0 und 1 multiplizierte Teilrotation hinzugefügt und die Lage des Referenzwendepunkts um diese Länge geändert. Die Restteilrotation wird auf dem Rückweg ausgeführt. Dann erfolgt Bewegung bis zum Ende der letzten vollständigen Rotation vor dem nächsten Wendepunkt, wo sich das Verfahren dann wiederholt. Der Versatz der Umkehrpunkte muss erfolgen, damit die Auftreffpunkte der Brenner in der 0°-Ebene im Folgehub versetzt sind, wobei eine Gleichverteilung zwischen 0 bis 1 aber auch zulässt, dass kein Versatz erfolgt (z.B. im allerersten Hub für 0 und 1). In den Folgehüben ändern sich die Zahlenwerte, was von der Länge des jeweiligen Vorgängerhubs bzw. dessen Wendepunktspositionen abhängig ist.

In einer zweiten Verfahrensweise wird die Lage jedes Wendepunktes so geändert, dass der erste Abscheidepunkt eines Aufbaubrenners auf dem Rückweg immer an einer bestimmten Stelle bezüglich des festen Referenzwendepunkts liegt. Diese Position wird durch die Addition einer mit einer Zufallszahl zwischen -0,5 und +0,5 multiplizierten Teilrotation zum Referenzwendepunkt bestimmt.

Eine Kombination der vorbeschriebenen Maßnahmen zur Vermeidung von Interferenzen kann das erfindungsgemäße Verfahren auch so durchgeführt werden, dass die Aufbaubrenner eine Translationsbewegung im Wesentlichen parallel zu der Längsachse des rotierenden Trägers um eine Amplitude des doppelten Brenner-Brenner-Abstands 2d durchführen, während im Wesentlichen zeitgleich die Ablagerungsfläche eine Rotation von (m₂ + (k/n) + y) Umdrehungen durchführt, wobei m₂ einer ganzzahligen Zahl von 1 bis 100, vorzugsweise von 3 bis 35, noch weiter bevorzugt von 5 bis 25, entspricht, k eine natürliche Zahl kleiner n ist, m₁ = m₂+(k/n) entspricht und y zwischen -0,3 und 0,3 liegt und sich fortlaufend im erfindungsgemäßen Verfahren ändern kann.

Bei dieser Ausgestaltung des erfindungsgemäßen Verfahrens kann dann auf die Variation der Lage der Wendepunkte verzichtet werden. Daraus ergibt sich, dass in einer ersten Variante dieser Ausgestaltung die Lage der Wendepunkte fest definiert ist, während in einer zweiten Variante dieser Ausgestaltung die Lage der Wendepunkte variieren kann.

Sollte in dieser Ausgestaltung des erfindungsgemäßen Verfahrens eine Variation der Lage der Wendepunkte erfolgen, so können sich die Lagen der Wendepunkte in jedem Hub der reversierenden Bewegung verändern. Alternativ ist es möglich, dass sich die Lage der Wendepunkte durch einen fest definierten Versatz in jedem Hub verändern.

Die vorstehend bezeichnete Variabel y, die zwischen -0,3 und 0,3 liegt und sich fortlaufend im erfindungsgemäßen Verfahren ändern kann, kann im Verlauf des erfindungsgemäßen Verfahrens entweder nach einem festen Muster, nach einer statistische Verteilung oder gesteuert verändert werden, wobei die gesteuerte Fahrweise zur Optimierung des gleichmäßigen Sootauftrags dienen kann.

Wenn sich die Lage der Wendepunkte verändert, so ist dabei zu beachten, dass die Wendepunkte jeweils so verändert werden, dass die Amplitude im Mittel dem n-fachen Brenner-Brenner-Abstand entspricht, da ansonsten Durchmesserschwankungen im Sootkörper resultieren. Die Wendepunkte können durch einen statistisch veränderten Versatz in jedem Hub verändert werden. Für die vorliegende Erfindung ist es entscheidend, dass die Gesamtverfahrensbedingungen, d. h. die Rotation der Ablagerungsfläche und die Variation der Wendepunkte von dem Fachmann so durchgeführt werden, dass das Verfahren insgesamt zu einem homogenen Sootaufbau führt.

Bevorzugt ist es, wenn das Bewegungsprofil der Aufbaubrenner auf der Ablagerungsfläche bestimmt wird. Um einen homogenen Sootaufbau zu gewährleisten, wird das Bewegungsprofil der Aufbaubrenner auf der Ablagerungsfläche vorzugsweise kontinuierlich während der Abscheidung der SiO₂-Sootteilchen überwacht.

Insbesondere ist es bevorzugt, wenn das Bewegungsprofil der Aufbaubrenner auf der Ablagerungsfläche kontinuierlich während der Abscheidung der SiO₂-Sootteilchen online mittels eines Prozessors überwacht wird.

Des Weiteren ist bevorzugt, wenn die erfindungsgemäße Vorrichtung einen Prozessor umfasst, welcher so ausgebildet ist, dass er aus dem Bewegungsprofil der Aufbaubrenner auf der Ablagerungsfläche Bereiche der Ablagerungsfläche identifiziert, in welchen für einen homogenen Sootaufbau zu wenige SiO₂-Sootteilchen abgeschieden wurden.

Der Prozessor steuert in solch einen Fall vorzugsweise die Rotation der Ablagerungsfläche um die Längsachse des Trägers und/oder die Lage der Wendepunkte der reversierenden Translationsbewegung der Aufbaubrenner so, dass ein im Wesentlichen homogener Sootkörper aufgebaut wird.

In dem erfindungsgemäßen Verfahren kann die Längsachse des rotierenden Trägers vertikal oder horizontal ausgerichtet sein; entsprechend sind die Aufbaubrenner angeordnet. Es ist bevorzugt, wenn die Längsachse des rotierenden Trägers horizontal ausgerichtet ist.

Da es im erfindungsgemäßen Verfahren zu einem schichtweisen Aufbau des Sootkörpers kommt, werden die Frequenzen der Translation der Aufbaubrenner und der Rotation der Ablagerungsfläche bei jedem Richtungswechsel der reversierenden Bewegung der Aufbaubrenner an den aktuellen Durchmesser des SiO₂-Sootkörpers angepasst.

Im Rahmen der vorliegenden Erfindung ist die räumliche Anordnung der Aufbaubrenner zueinander im Allgemeinen starr und die Translationsbewegung relativ zu dem Träger erfolgt im Allgemeinen gemeinsam.

Zur Abscheidung der SiO₂-Sootteichen werden üblicherweise mindestens 2 Aufbaubrenner, vorzugsweise 10 bis 100 Aufbaubrenner, weiter bevorzugt 20 bis 50 Aufbaubrenner, verwendet, wobei der Abstand zwischen den jeweiligen Aufbaubrennern im Wesentlichen konstant ist und d entspricht.

Des Weiteren werden die Frequenzen der Translation der Aufbaubrenner und der Rotation der Ablagerungsfläche bei jedem Richtungswechsel der reversierenden Bewegung der Aufbaubrenner üblicherweise an den aktuellen Durchmesser des SiO₂-Sootkörpers angepasst.

Das erfindungsgemäße Verfahren umfasst vorzugsweise die nachfolgenden Verfahrensschritte:
(1) Verdampfen eines Einsatzmaterials, das mindestens eine siliziumorganische Ausgangsverbindung enthält, unter Bildung eines Einsatzmaterialdampfes;
(2) Zuführen des Einsatzmaterialdampfes aus Verfahrensschritt (1) zu einer Reaktionszone, in welcher der Einsatzmaterialdampf in Gegenwart von Sauerstoff in einer Flamme verbrannt wird und durch Oxidation und/oder durch Hydrolyse zu SiO₂-Sootteilchen umgesetzt wird;
(3) Abscheiden der aus Verfahrensschritt (2) resultierenden SiO₂-Sootteilohen auf einer Ablagerungsfläche unter Ausbildung eines Sootkörpers,
(4) Trocknen und Verglasen des aus Verfahrensschritt (3) resultierenden Sootkörpers unter Bildung von synthetischem Quarzglas.

Im Nachfolgenden werden die einzelnen Verfahrensschritte näher beschrieben:

### Verfahrensschritt (1) - Verdampfen des Einsatzmaterials

Im Verfahrensschritt (1) wird ein Einsatzmaterial, das mindestens eine siliziumorganische Ausgangsverbindung enthält, unter Bildung eines Einsatzmaterialdampfes verdampft. Bei der polymerisierbaren siliziumhaltigen Ausgangsverbindung handelt es sich bevorzugt um eine polymerisierbare Polyalkylsiloxanverbindung.

Grundsätzlich kann erfindungsgemäß jede polymerisierbare Polyalkylsiloxanverbindung, welche sich zur Herstellung von synthetischem Quarzglas eignet, verwendet werden. Im Rahmen der Erfindung umfasst der Begriff Polyalkylsiloxan sowohl lineare (umfassend auch verzweigte Strukturen) als auch cyclische Molekularstrukturen.

Besonders geeignete cyclische Vertreter sind Polyalkylsiloxane mit der allgemeinen Summenformel

SiₚOₚ(R)₂ₚ,

wobei p eine ganze Zahl größer gleich 3 ist. Der Rest "R" ist eine Alkylgruppe, im einfachsten Fall eine Methylgruppe.

Polyalkylsiloxane zeichnen sich durch einen besonders hohen Anteil an Silizium pro Gewichtsanteil aus, was zur Wirtschaftlichkeit ihres Einsatzes bei der Herstellung von synthetischem Quarzglas beiträgt.

Die Polyalkylsiloxanverbindung ist dabei vorzugsweise ausgewählt aus der Gruppe, bestehend aus Hexamethylcyclotrisiloxan (D3), Octamethylcyclotetrasiloxan (D4), Dekamethylcyclopentasiloxan (D5), Dodecamethylcyclohexasiloxan (D6), Tetradekamethylcycloheptasiloxan (D7), Hexadecamethylcyclooctasiloxan (D8) sowie deren linearen Homologen und beliebigen Mischungen der vorgenannten Verbindungen. Die Notation D3, D4, D6, D7 und D8 entstammt dabei einer von General Electric Inc. eingeführten Notation, bei der "D" die Gruppe [(CH₃)₂Si]-O- repräsentiert.

Im Rahmen der vorliegenden Erfindung können auch Mischungen der vorgenannten Polyalkylsiloxanverbindungen verwendet werden.

Wegen der großtechnischen Verfügbarkeit in hoher Reinheit wird derzeit Octamethylcyclotetrasiloxan (OMCTS) bevorzugt eingesetzt. Im Rahmen der vorliegenden Erfindung ist es daher insbesondere bevorzugt, wenn es sich bei der Polyalkylsiloxanverbindung um Octamethylcyclotetrasiloxan (D4) handelt.

Grundsätzlich ist es möglich, dass das Einsatzmaterial vor dem Einbringen in Verfahrensschritt (1) einer Aufreinigung unterzogen wird. Dem Fachmann sind solche Aufreinigungsverfahren bekannt. In einer bevorzugten Ausführungsform wird das Einsatzmaterial jedoch zuvor keinem vorgeschaltetem Aufreinigungsverfahren unterzogen.

Die Verdampfung des Einsatzmaterials kann mit oder ohne Anwesenheit einer Trägergas-Komponente erfolgen. Bevorzugt erfolgt die Verdampfung des Einsatzmaterials in Anwesenheit eines Trägergases, da dadurch die Verdampfung bei Temperaturen unterhalb des Siedepunktes der siliziumorganischen Ausgangsverbindung erfolgen kann. Als Trägergas wird üblicherweise ein Inertgas, beispielsweise Stickstoff oder Argon, verwendet. Wenn ein Trägergas verwendet wird, so liegt das Molverhältnis der siliziumorganischen Ausgangsverbindung zum Trägergas bevorzugt im Bereich von 0,01 bis 2; besonders bevorzugt im Bereich von 0,02 bis 1,5 und ganz besonders bevorzugt im Bereich von 0,05 bis 1,25. Insbesondere ist es bevorzugt, dass als Trägergas Stickstoff mit einem Feuchtegehalt < 40 Volumen-ppm eingesetzt wird und als siliziumorganische Ausgangsverbindung OMCTS. Dabei ist es des Weiteren bevorzugt, dass das molekulare Verhältnis von OMCTS zu Stickstoff im Bereich von 0,015 bis 1,5 liegt.

Der Verfahrensschritt des Verdampfens ist dem Fachmann an sich bekannt. Dabei wird die siliziumorganische Ausgangsverbindung je nach gewähltem molekularem Verhältnis der siliziumorganischen Ausgangsverbindung und Trägergas vorzugsweise bei Temperaturen zwischen 120 und 200 °C in eine dampfförmige Phase überführt. Dabei sollte die Verdampfungstemperatur in der Verdampfungskammer immer mindestens einige Grad oberhalb des Taupunktes der siliziumorganischen Ausgangsverbindung sein. Der Taupunkt ist wiederum abhängig vom gewählten molekularen Verhältnis aus siliziumorganischer Ausgangsverbindung und Trägergas. In einem bevorzugten Ausführungsverfahren wird dazu die siliziumorganische Ausgangsverbindung vor der Verdampfung auf Temperaturen zwischen 40 und 120 °C vorerwärmt und anschließend in eine Verdampfungskammer versprüht, die eine höhere Temperatur als die Vorerwärmung der Einsatzstoffe aufweist. Das inerte Trägergas kann in einer bevorzugten Ausführungsform zusätzlich auf Temperaturen von bis zu 250 °C vorerwärmt werden, bevor es der Verdampfungskammer zugeführt wird. Von Vorteil ist, dass die Temperatur in der Verdampfungskammer im Mittel immer oberhalb der Taupunkttemperatur der Mischung aus siliziumorganischer Ausgangsverbindung und Trägergas liegt. Geeignete Verdampfungsverfahren werden z. B. in den Internationalen Patentanmeldungen WO 2013/087751 A und WO 2014/187513 A sowie der deutschen Patentanmeldung DE 10 2013 209 673 beschrieben.

Im Rahmen der Erfindung beschreibt der Begriff "Taupunkt" die Temperatur, bei der sich ein Gleichgewichtszustand von kondensierender und verdunstender Flüssigkeit einstellt.

Im Rahmen der vorliegenden Erfindung wird unter einer "Verdampfung" der Vorgang verstanden, bei der das Einsatzmaterial im Wesentlichen von der flüssigen Phase in eine gasförmige Phase überführt wird. Dies geschieht bevorzugt, indem, wie oben beschrieben, Temperaturen verwendet werden, welche oberhalb des Taupunktes der siliziumorganischen Ausgangsverbindung als Hauptkomponente des Einsatzmaterials liegen. Dem Fachmann ist dabei bewusst, dass verfahrenstechnisch nicht ausgeschlossen werden kann, dass kleine Flüssigkeitstropfen des Einsatzmaterials mitgerissen werden können. Somit wird im Verfahrensschritt (1) bevorzugt ein Einsatzmaterialdampf erzeugt, welcher vorzugsweise nicht weniger als 97 Mol.-%, bevorzugt nicht weniger als 98 Mol.-%, besonders bevorzugt nicht weniger als 99 Mol.-%, ganz besonders bevorzugt nicht weniger als 99,9 Mol.-% gasförmige Bestandteile enthält.

Die dampfförmige siliziumorganische Ausgangsverbindung bzw. ein Gemisch aus Trägergas und dampfförmiger siliziumorganischer Ausgangsverbindung wird üblicherweise der Verdampfungskammer entnommen und in die Aufbaubrenner geleitet. Vor dem Einleiten in die Aufbaubrenner wird das dampfförmige Material bzw. die Mischung aus dampfförmigem Material und Trägergas vorzugweise mit Sauerstoff gemischt. In der Flamme wird die siliziumorganische Ausgangsverbindung zu SiO₂ oxidiert. Es bildet sich feinteiliges, amorphes SiO₂ (SiO₂-Ruß), das in Form einer porösen Masse zunächst auf der Oberfläche eines Trägers und später auf der Oberfläche des sich bildenden Sootkörpers abgeschieden wird.

### Verfahrensschritt (2) - Zuführen des Einsatzmaterialdampfes zu einer Reaktionszone, in welcher der Einsatzmaterialdampf in Gegenwart von Sauerstoff in einer Flamme verbrannt wird und durch Oxidation und/oder durch Hydrolyse zu SiO₂-Sootpartikeln umgesetzt wird

Im Verfahrensschritt (2) wird der aus Verfahrensschritt (1) resultierende gasförmige Einsatzmaterialdampf zu einer Reaktionszone geführt, in dem der Einsatzmaterialdampf durch Oxidation und/oder oder durch Hydrolyse zu SiO₂-Teilchen umgesetzt wird.

Dieser Verfahrensschritt entspricht dem bekannten und bereits vorstehend näher beschriebenen Sootverfahren.

Für die Verbrennung des Einsatzmaterialdampfs werden üblicherweise konzentrische Aufbaubrenner verwendet, die um den jeweiligen Mittelpunkt des Brennermunds kreisförmig angeordnete Gasaustrittsdüsen aufweisen.

Im Rahmen der vorliegenden Erfindung wird eine Verfahrensweise bevorzugt, bei welcher den Aufbaubrennern in einem zentralen Bereich eine erste, Silizium enthaltende Ausgangskomponente, in einem äußeren Bereich einen Sauerstoffstrom, und zwischen dem zentralen Bereich und dem äußeren Bereich ein Trenngasstrom (Wasserstoff) zugeführt werden.

Die zentrale Düse dient dabei in der Regel zum Zuführen des Einsatzmaterialdampfs, welcher im Rahmen der vorliegenden Erfindung üblicherweise mit einem Trägergas vorgemischt verwendet wird. Darüber hinaus wird dem Einsatzmaterialdampf vorzugsweise Sauerstoff zugesetzt, so dass aus der Mitteldüse der üblicherweise verwendeten konzentrischen Aufbaubrennern ein Feedstrom resultiert, der neben dem Einsatzmaterialdampf noch das Trägergas und Sauerstoff enthält.

Die zentrale Düse der Aufbaubrenner wird in der Regel von einer zweiten Düse, die konzentrisch um die Mitteldüse angeordnet ist, umfasst und aus welcher ein Trenngas in den Brenner eingeführt wird. Dieses Trenngas trennt die SiO₂-Ausgangsverbindung von dem weiteren Sauerstoffstrom, der aus einer weiteren konzentrisch um die Mitteldüse und die Trenngasdüse angeordneten konzentrischen Düse in den Brenner einströmt.

Die mittels der Aufbaubrenner erzeugten SiO₂-Sootteilchen werden üblicherweise auf einem um seine Längsachse rotierendem Trägerrohr abgeschieden, so dass schichtweise der Sootkörper aufgebaut wird. Hierzu werden sie entlang der Längsachse des Trägerrohrs zwischen zwei Wendepunkten hin- und herbewegt. Die Ausgestaltung dieser Translation wurde vorstehend näher beschrieben.

Die Aufbaubrenner, von welchen im Rahmen der vorliegenden Erfindung mindestens zwei verwendet werden, stellen einen Brennerblock da.

### Verfahrensschritt (3) - Abscheiden der SiO₂-Teilchen

Im Verfahrensschritt (3) werden die aus Verfahrensschritt (2) resultierenden SiO₂-Teilchen auf einer Ablagerungsfläche abgeschieden. Die Ausgestaltung dieses Verfahrensschritts liegt im Können und Wissen des Fachmanns.

Hierzu werden die im Verfahrensschritt (2) gebildeten SiO₂-Teilchen auf einem rotierenden Träger schichtweise unter Bildung eines porösen Sootkörpers abgeschieden.

Während des Abscheidens der Soot-Teilchen wird der Abstand zwischen dem Brenner und dem Trägermaterial gegebenenfalls verändert, um die zuvor bereits beschriebene Voraussetzung zu erfüllen.

### Verfahrensschritt (4) - gegebenenfalls Trocknen und Verglasen

Im Verfahrensschritt (4) werden die aus Verfahrensschritt (3) resultierenden SiO₂-Teilchen unter Bildung von synthetischem Quarzglas getrocknet und verglast. Dieser Verfahrensschritt ist notwendig, da die zuvor durchgeführten Verfahrensschritte gemäß einem Sootverfahren durchgeführt wurden. Die Ausgestaltung dieses Verfahrensschritts liegt im Können und Wissen des Fachmanns.

Das erfindungsgemäße Verfahren wird als "Sootverfahren" durchgeführt, bei welchem die Temperatur beim Abscheiden der SiO₂-Teilchen im Verfahrensschritt (3) so niedrig ist, dass eine poröse SiO₂-Sootschicht erhalten wird, die im separaten Verfahrensschritt (4) zu synthetischem Quarzglas getrocknet und verglast wird.

Durch das erfindungsgemäße Verfahren lassen sich die eingangs diskutierten Nachteile des Standes der Technik effizient vermeiden.

### VORRICHTUNG ZUR ABSCHEIDUNG VON SiO₂-SOOTTEICHEN

In einem weiteren Aspekt betrifft die vorliegende Erfindung eine Vorrichtung zum Durchführen des oben beschriebenen erfindungsgemäßen Verfahrens. Die erfindungsgemäße Vorrichtung dient zur Abscheidung von SiO₂-Sootteilchen auf einer Ablagerungsfläche und weist mindestens zwei zueinander beabstandeten Aufbaubrennern auf, wobei
der Abstand zwischen den mindestens zwei Aufbaubrennern d beträgt; und
die Ablagerungsfläche eine Zylindermantelfläche eines um seine Längsachse rotierenden Trägers ist, auf welchem schichtweise SiO₂-Sootteilchen abgeschieden werden.

Die erfindungsgemäße Vorrichtung ist dann dadurch gekennzeichnet, dass
die Aufbaubrenner und die Ablagerungsfläche so eingerichtet sind, dass die Aufbaubrenner, bezogen auf die Ablagerungsfläche, eine Translationsbewegung im Wesentlichen parallel zu der Längsachse des rotierenden Trägers um eine Amplitude des n-fachen Brenner-Brenner-Abstandes d durchführen, wobei n eine ganzzahlige Zahl größer gleich 2 ist und d dem einfachen Brenner-Brenner-Abstand entspricht,
die Ablagerungsfläche so eingerichtet ist, dass die Ablagerungsfläche um eine m1-fache Anzahl um die Längsachse des Trägers rotiert, wobei m1 eine von ganzzahligen Zahlen abweichende positive Dezimalzahl darstellt, und
die Vorrichtung eine Steuerung aufweist, die so eingerichtet ist, dass die Zeitspanne für die m1-fache Rotation der Längsachse des Trägers im Wesentlichen der Zeitspanne für die Translationsbewegung der Aufbaubrenner von einem Brenner-Brenner-Abstand d entspricht.

Bei der Steuerung der Vorrichtung kann es sich um einen Prozessor mit einer entsprechenden Programmierung handeln.

Die erfindungsgemäße Steuerung ist vorzugsweise so eingerichtet, dass die Aufbaubrenner eine Translationsbewegung im Wesentlichen parallel zu der Längsachse des rotierenden Trägers um eine Amplitude des n-fachen Brenner-Brenner-Abstands d durchführen, wobei n eine ganzzahlige Zahl größer gleich 2 ist und d dem einfachen Brenner-Brenner-Absatz entspricht und die Ablagerungsfläche um die Längsachse des Trägers rotiert.

Durch die Steuerung der erfindungsgemäßen Vorrichtung wird erreicht, dass die Zeitspanne für die (m₂+k/n)-fache Rotation der Ablagerungsfläche um die Längsachse des Trägers im Wesentlichen der Zeitspanne für die Translationsbewegung der Aufbaubrenner von einem Brenner-Brenner-Abstand d entspricht, wobei m₂ einer ganzzahligen Zahl von 1 bis 100, vorzugsweise von 3 bis 35, noch weiter bevorzugt von 5 bis 25, entspricht und k sowie n wie vorstehend definiert sind.

Die erfindungsgemäße Vorrichtung ist so eingerichtet, dass sie es ermöglicht, dass die Translationsbewegungen der Aufbaubrenner eine reversierende Bewegung darstellen, deren Richtung sich in Wendepunkten verändert, wobei sich die Position der Wendepunkte, bezogen auf die Ablagerungsfläche, verändern können. Die Veränderung der Wendepunkte erfolgt ebenfalls durch die Steuerung der erfindungsgemäßen Vorrichtung.

Die Steuerung der Vorrichtung ist des Weiteren so eingerichtet, dass sich die Wendepunkte der reversierenden Bewegung in jedem Hub verändern können, wobei die Steuerung es ermöglichen kann, dass sich die Wendepunkte durch einen fest definierten Versatz in jedem Hub verändern oder sich die Wendepunkte durch einen statistisch veränderten Versatz in jedem Hub verändern.

Die erfindungsgemäße Vorrichtung ist so eingerichtet, dass die Aufbaubrenner eine Translationsbewegung im Wesentlichen parallel zu der Längsachse des rotierenden Trägers um eine Amplitude des doppelten Brenner-Brenner-Abstands 2d durchführen, während im Wesentlichen zeitgleich die Ablagerungsfläche eine Rotation von (m₂ + k/n + y) Umdrehungen durchführt, wobei n eine ganzzahlige Zahl größer gleich 2 darstellt und y eine Zahl kleiner 0,3, vorzugsweise kleiner 0,2, weiter bevorzugt kleiner 0,15, weiter bevorzugt kleiner 0,1, und wobei m₂ einer ganzzahligen Zahl von 1 bis 100, vorzugsweise von 3 bis 35, noch weiter bevorzugt von 5 bis 25, entspricht und k sowie n wie vorstehend definiert sind.

## Patentansprüche

1. Verfahren zur Abscheidung von SiO₂-Sootteilchen auf einer Ablagerungsfläche unter Verwendung von mindestens zwei zueinander beabstandeten und benachbarten Aufbaubrennern, wobei
der Abstand zwischen den mindestens zwei Aufbaubrennern d beträgt; und
die Ablagerungsfläche eine Zylindermantelfläche eines um seine Längsachse rotierenden Trägers ist, auf welchem schichtweise SiO₂-Sootteilchen abgeschieden werden,
**dadurch gekennzeichnet, dass**
die Aufbaubrenner, bezogen auf die Ablagerungsfläche, eine Translationsbewegung im Wesentlichen parallel zu der Längsachse des rotierenden Trägers um eine Amplitude des n-fachen Brenner-Brenner-Abstandes d durchführen, wobei n eine ganzzahlige Zahl größer gleich 2 ist und d dem einfachen Brenner-Brenner-Abstand entspricht,
die Ablagerungsfläche um eine m₁-fache Anzahl um die Längsachse des Trägers rotiert, wobei m₁ eine von ganzzahligen Zahlen abweichende positive Dezimalzahl darstellt, und
die Zeitspanne für die m₁-fache Rotation der Längsachse des Trägers im Wesentlichen der Zeitspanne für die Translationsbewegung der Aufbaubrenner von einem Brenner-Brenner-Abstand d entspricht.

2. Verfahren nach Anspruch 1, **dadurch gekennzeichnet, dass**
die Ablagerungsfläche um die Längsachse des Trägers rotiert, und
die Zeitspanne für die (m₂+(k/n))-fache Rotation der Ablagerungsfläche um die Längsachse des Trägers im Wesentlichen der Zeitspanne für die Translationsbewegung der Aufbaubrenner von einem Brenner-Brenner-Abstand d entspricht, wobei m₂ einer ganzzahligen Zahl von 1 bis 100, vorzugsweise von 3 bis 35, noch weiter bevorzugt von 5 bis 25, entspricht, k eine natürliche Zahl kleiner n ist und m₁ = m₂+(k/n) entspricht.

3. Verfahren nach Anspruch 1 oder 2, **dadurch gekennzeichnet, dass** die Translationsbewegungen der Aufbaubrenner eine reversierende Bewegung darstellen, deren Richtung sich in Wendepunkten verändert, wobei sich die axiale Position der Wendepunkte, bezogen auf die Ablagerungsfläche und die Längsachse, verändern.

4. Verfahren nach Anspruch 3, **dadurch gekennzeichnet, dass** sich die Wendepunkte der reversierenden Bewegung in jedem Hub verändern.

5. Verfahren nach Anspruch 3 oder 4, **dadurch gekennzeichnet, dass** sich die Wendepunkte gemäß einem fest vordefinierten Bewegungsmuster in jedem Hub verändern.

6. Verfahren nach Anspruch 3 oder 4, **dadurch gekennzeichnet, dass** sich die Wendepunkte durch einen statistisch veränderten Versatz in jedem Hub verändern.

7. Verfahren nach Anspruch 1, **dadurch gekennzeichnet, dass** die Aufbaubrenner eine Translationsbewegung im Wesentlichen parallel zu der Längsachse des rotierenden Trägers um eine Amplitude des doppelten Brenner-Brenner-Abstands 2d durchführen, während im Wesentlichen zeitgleich die Ablagerungsfläche eine Rotation von (m₂ + (k/n) + y) Umdrehungen durchführt, wobei m₂ einer ganzzahligen Zahl von 1 bis 100, vorzugsweise von 3 bis 35, noch weiter bevorzugt von 5 bis 25, entspricht, k eine natürliche Zahl kleiner n ist, m₁ = m₂+(k/n) entspricht und y zwischen -0,3 und 0,3 variiert.

8. Verfahren nach einem der Ansprüche 1 bis 4 oder 7, **dadurch gekennzeichnet, dass** die Rotation der Ablagerungsfläche und die Variation der Wendepunkte so angepasst wird, dass das Verfahren zu einem homogenen Sootaufbau führt.

9. Verfahren nach einem der Ansprüche 1 bis 8, **dadurch gekennzeichnet, dass** das Bewegungsprofil der Aufbaubrenner auf der Ablagerungsfläche bestimmt wird.

10. Verfahren nach Anspruch 10, **dadurch gekennzeichnet, dass** das Bewegungsprofil der Aufbaubrenner auf der Ablagerungsfläche kontinuierlich während der Abscheidung der SiO₂-Sootteilchen online mittels eines Prozessors überwacht wird.

11. Verfahren nach Anspruch 10, **dadurch gekennzeichnet, dass** der Prozessor aus dem Bewegungsprofil der Aufbaubrenner auf der Ablagerungsfläche Bereiche der Ablagerungsfläche identifiziert, in welchen für einen homogenen Sootaufbau zu wenige SiO₂-Sootteilchen abgeschieden wurden.

12. Verfahren nach Anspruch 11, **dadurch gekennzeichnet, dass** der Prozessor die Rotation der Ablagerungsfläche um die Längsachse des Trägers und/oder die Wendepunkte der reversierenden Translationsbewegung der Aufbaubrenner so steuert, dass ein im Wesentlichen homogener Sootkörper aufgebaut wird.

13. Verfahren nach einem der Ansprüche 1 bis 12, **dadurch gekennzeichnet, dass** die Längsachse des rotierenden Trägers vertikal oder horizontal ausgerichtet ist.

14. Verfahren nach einem der Ansprüche 1 bis 13, **dadurch gekennzeichnet, dass** die Längsachse des rotierenden Trägers horizontal ausgerichtet ist.

15. Verfahren nach einem der Ansprüche 1 bis 14, **dadurch gekennzeichnet, dass** die Frequenzen der Translation der Aufbaubrenner und der Rotation der Ablagerungsfläche bei jedem Richtungswechsel der reversierenden Bewegung der Aufbaubrenner an den aktuellen Durchmesser des SiO₂-Sootkörpers angepasst werden.
